# EUROPÄISCHE PATENTSCHRIFT

(11) **EP 2 158 566 B1**
(45) Veröffentlichungstag und Bekanntmachung des Hinweises auf die Patenterteilung: **28.03.2012**
(21) Anmeldenummer: 08759246.5
(22) Anmeldetag: 13.06.2008
(51) Int. Cl.: H01Q 1/27, G06K 19/077, H01Q 1/22

(54) **TRANSPONDERSYSTEM**
TRANSPONDER SYSTEM
SYSTÈME TRANSPONDEUR

(30) Priorität: 15.06.2007 DE 102007027539
(43) Veröffentlichungstag der Anmeldung: 03.03.2010
(73) Patentinhaber: Giesecke & Devrient GmbH, 81677 München (DE)
(72) Erfinder: OLBRICH, Magnus, 81543 München (DE)
(86) Internationale Anmeldenummer: PCT/EP2008/004795
(87) Internationale Veröffentlichungsnummer: WO 2008/151831

(56) Entgegenhaltungen:
- EP-A- 1 630 730
- EP-A- 1 713 022
- WO-A-2004/008386
- WO-A-2006/128448

## Beschreibung

Die Erfindung betrifft allgemein das technische Gebiet der Transponder zur berührungslosen Übertragung von Daten und betrifft insbesondere ein Transponderelement zur Verwendung an oder in einem metallischen Gegenstand sowie ein System umfassend einen metallischen tragbaren Gegenstand mit einem solchen Transponderelement.

Transponder im Sinne der vorliegenden Erfindung umfassen einen Transponderchip sowie eine Transponderantenne zur Datenübertragung und gegebenenfalls auch zur Energieübertragung zwischen dem Chip und einem externen Lesegerät im Wege elektromagnetischer Kopplung. Sie sind häufig kartenförmig ausgebildet und besitzen beispielsweise die Abmessungen einer üblichen Chipkarte. Kleinere Abmessungen sind erforderlich, wenn die Karten in Gegenstände eingesetzt werden sollen, um diese Gegenstände mit speziellen Funktionen auszustatten, wie beispielsweise Bezahlfunktionen. So lassen sich beispielsweise herkömmliche SIM-Karten in Mobilfunktelefonen mit einer Transponderfunktion versehen, wenn der Chip der SIM-Karte oder ein zusätzlicher Chip mit einer Transponderantenne verbunden wird. Wird das Mobilfunktelefon dann in die Reichweite des elektromagnetischen Feldes eines entsprechenden Lesegerätes gebracht, so kann die SIM-Karte Kredit- oder Geldkartenfunktion übernehmen und die Bezahlung kann kontaktlos mittels der SIM-Karte erfolgen. Auch andere Funktionalitäten und Anwendungen sind denkbar. Anstelle einer SIM-Karte eines Mobilfunlctelefons kann eine entsprechende Transponderchipkarte beispielsweise auch in Armbanduhren eingesetzt werden. Ein solches System wird von LAKS GmbH/Österreich angeboten, wobei die Armbanduhr zusätzlich eingerichtet ist, die in die Uhr eingesetzte Minichipkarte über ein an die Uhr angeschlossenes USB-Kabel beispielsweise an einen Home-PC anzuschließen.

WO 2004/008386 A1, dass den Oberbegriff des Anspruchs 1 bildet, offenbart eine Ausweiskarte, die ein Substrat enthält, das beispielsweise aus Papier besteht, auf dessen Vorderseite Text und dergleichen aufgedruckt ist. Auf der Rückseite ist ein Leitungsmuster aufgedruckt. Es enthält eine einzelne Spulenwindung einer Antenne des Transponders sowie zwei erste Beläge zweier Kondensatoren. Die Gegenelektrode, das heisst der andere Belag zu den beiden ersten Belägen der Kondensatoren, wird durch einen auf der Vorderseite befindlichen, ein Sicherheitsmerkmal der Ausweiskarte bildenden Leadstreifen gebildet. Ein Transponderchip steht mit dem Leitungsmuster mechanisch und elektrisch in Verbindung.

WO 2006/128448 A1 offenbart eine Anordnung mit einem Transponder und einem dem Transponder zugeordneten metallischen Bauteil. Mittels einer Vertiefung im metallischen Bauteil ist eine Antenne für den Transponder gebildet.

Der Einsatz von Transponderchipkarten in metallischen Gegenständen, wie in metallischen Uhrgehäusen, ist jedoch problematisch. Dies liegt daran, dass Transponderchipkarten der hier interessierenden Art einen Schwingkreis für den kontaktlosen Datenaustausch benötigen, der aus einer die Transponderantenne bildenden Spule und einer Kapazität besteht. Während die Anzahl und die Fläche der Spulenwindungen die Höhe der Induktivität und damit die Leistungsfähigkeit des Transponders bestimmen, dient die Kapazität zur Einstellung einer vorgegebenen Resonanzfrequenz des Transponders. Bei gängigen RFID-Transpondern beträgt die Resonanzfrequenz 13,56 MHz. Aber auch andere Frequenzen sind nicht unüblich. Die Grundlagen von RFID-Systemen sind in Finkenzeller "RFID-Handbuch", 3. Auflage, Karl Hanser Verlag, München, erläutert.

Bei Transpondern mit mehrgängigen Antennenspulen sind die durch die Spule, den Chip und andere Elemente des Transponders gebildeten parasitären Kapazitäten im allgemeinen ausreichend. Dagegen benötigen Antennenspulen mit einer einzigen oder wenigen Spulenwindungen häufig externe Kapazitäten in Form eines zusätzlichen Kondensators zur Einstellung des Systems auf eine vorgegebene Resonanzfrequenz. Es ist in diesem Zusammenhang bekannt, die Spule und eine Kondensatorfläche des Kondensators auf einer Seite des Transpondersubstrats und die andere Kondensatorfläche des Kondensators auf der anderen Seite des Substrats aufzubringen (DE 102 32 007 A1). Auch ist es bekannt, mehrere Schwingkreise so übereinander anzuordnen, dass über die Spulen eine magnetische Kopplung besteht, wobei in diesem Falle die Resonanzfrequenz von der Anzahl der Schwingkreise und von den Resonanzfrequenzen abhängt, die die Schwingkreise jeweils einzeln bei einem voneinander entkoppelten Betrieb aufweisen würden (DE 102 58 670 A1). Dabei ergeben sich zusätzliche parasitäre Kapazitäten aufgrund der sich überdeckenden Spulenbestandteile. Darüberhinaus besitzt jeder der Schwingkreise einen eigenen Kondensator zur Einstellung der Resonanzfrequenz des betreffenden Schwingkreises.

Wird nun ein solcher Transponder zusammen mit einem metallischen Träger in das Magnetwechselfeld eines Lesegeräts gebracht, so erzeugt das Wechselfeld in dem metallischen Träger Wirbelströme, welche die Leistungsfähigkeit des Transponders, der durch das Magnetfeld betrieben werden soll, reduziert. Aufgrund der Verluste der Wirbelströme und der erzeugten Gegeninduktion sinkt der Leseabstand. Darüber hinaus verschiebt sich die Resonanzfrequenz des Transponders.

Es ist daher erforderlich, die Transponderchipkarten mit einem ausreichenden Abstand zu den metallischen Flächen des Trägers in den Träger einzubauen oder auf dem Träger anzubringen, etwa unter Verwendung einer 5 bis 10 mm dicken elektrisch isolierenden Zwischenschicht. Dies ist jedoch aus Platzgründen unpraktisch und teilweise unmöglich. Es wurde bereits vorgeschlagen, anstelle der Zwischenschicht ein weichmagnetisches Element, beispielsweise Ferrit, zur Reduzierung der Wirbelströme vorzusehen (EP 1 640 893 A2). Dadurch lässt sich der Einfluss auf die Resonanzfrequenz verringern, jedoch verbleiben Leistungsverluste.

Aufgabe der vorliegenden Erfindung ist es daher, leistungsfähige Transponder zur Verwendung in metallischen Trägern vorzuschlagen, die wenig Platz benötigen.

Diese Aufgabe wird durch ein Transponderelement mit den Merkmalen des unabhängigen Anspruchs 1 gelöst. In davon abhängigen Ansprüchen sind vorteilhafte Weiterbildungen des Transponderelements sowie Systeme umfassend einen metallischen Träger mit einem solchen Transponderelement angegeben.

Anstatt nun, wie im Stand der Technik, den Transponder durch eine isolierende Zwischenschicht oder mittels weichmagnetischen Materials gegen störende Einflüsse des angrenzenden metallischen Trägers zu schützen, geht die Erfindung einen grundsätzlich anderen Weg, indem der metallische Träger in den Schwingkreis mit einbezogen wird. Dementsprechend dient eine metallische Fläche des metallischen Trägers als eine Kondensatorfläche des Kondensators des Schwingkreises. Somit werden die metallischen Flächen des Trägers zur Erzeugung der notwendigen Kapazität genutzt. Dementsprechend fließen diese Metallflächen nicht mehr als störend ein und brauchen nicht mehr kompensiert oder entkoppelt zu werden, sondern sie tragen konstruktiv und zwingend zur Funktion des Transponders bei. Als besonders vorteilhaft ergibt sich dabei, dass ein Aufbau des Transponders mit nur wenigen Lagen, insbesondere ein einlagiger Aufbau, realisiert werden kann.

Dazu umfasst ein erfindungsgemäßes Transponderelement ein Substrat, auf dessen einer Seite sowohl die Antennenspule als auch eine erste von zwei Kondensatorflächen vorgesehen sind. Die erste Kondensatorfläche kann durch die Antennenspule selbst gebildet sein und trägt dann lediglich zu einer parasitären Kapazität bei. Sie kann aber auch zusätzlich zur Antennenspule ausgebildet sein, um zusätzlich zu parasitären Kapazitäten eine explizite Kapazität zu schaffen. Antennenspule und/ oder Kondensatorfläche können aufgedruckt oder in das Substrat eingeätzt sein. Ferner kann die Antenne auch in Drahtverlegetechnik hergestellt sein. Der Transponderchip ist mit der Antennenspule und der Kondensatorfläche derart verbunden, dass die Antennenspule und der Kondensator dem Chip parallel geschaltet sind, um so den Schwingkreis zu bilden. Die zweite Kondensatorfläche ist selbst nicht Bestandteil des Transponderelements, sondern wird - wie erwähnt - durch eine metallische Fläche des das Transponderelement tragenden Gegenstands gebildet. Es kann sich dabei um eine ebene Metallfläche des Gegenstands oder um speziell vorgesehene Flächen handeln, wie beispielsweise eine metallische Erhebung oder einen Freibereich innerhalb einer abschirmenden Ferritschicht.

Das Substrat des Transponderelements selbst kann als dielektrische Schicht zwischen den beiden Kondensatorflächen dienen. Alternativ kann die mit der Antennenspule und der ersten Kondensatorfläche versehene Seite des Substrats mit einer speziellen, dünnen Schicht mit hoher Dielektrizitätskonstante abgedeckt werden und diese Schicht als Dielektrikum für den Kondensator dienen. In beiden Fällen kann erfindungsgemäß darauf verzichtet werden, die zweite Kondensatorfläche auf der anderen Seite des Dielektrikums aufzubringen, sondern die zweite Kondensatorfläche wird erfindungsgemäß durch die angrenzende metallische Schicht des Trägers gebildet.

Die Erfindung sieht eine galvanische Verbindung zwischen dem Transponderelement und der metallischen Fläche des den Transponder tragenden Gegenstand vor. Die galvanische Verbindung dient dazu, eine Verbindung zwischen dem Transponderelement und der zweiten Kondensatorfläche herzustellen, die Teil des Gegenstands ist. Diese Variante ist bei solchen Transpondern denkbar, die Kontaktschnittstellen besitzen, etwa weil sie zusätzlich zur kontaktlosen Kommunikation auch eine kontaktbehaftete Kommunikation vorsehen, beispielsweise bei den sogenannten Dual-Interface-Karten und Plug-In-SIMs. Auch können solche Kontaktschnittstellen extra eingeführt werden.

Nachfolgend wird die Erfindung beispielhaft anhand der begleitenden Zeichnungen erläutert. Darin zeigen:
- Fig. 1: schematisch ein System umfassend ein erfindungsgemäßes Transponderelement und eine externe metallische Fläche gemäß der Erfindung,
- Fig. 2a: ein exemplarish erläuterndes System umfassend ein allgemein bekanntes Transponderelement und eine externe metallische Fläche,
- Fig. 2b: erläuterndes Beispiel gemäß Figur 2a schematisch in Draufsicht und
- Fig. 3a bis 3c: verschiedene Anordnungsvarianten eines exemplarischen Transponderelements.

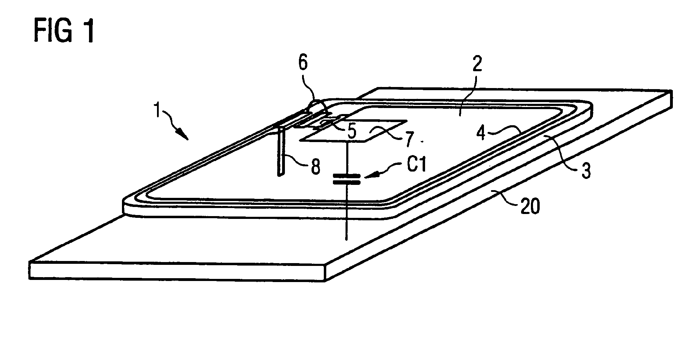

Anhand der rein schematischen Darstellung gemäß Figur 1 wird nachfolgend ein Ausführungsbeispiel der Erfindung erläutert. Das darin dargestellte Transponderelement 1 besitzt auf einer Seite 2 eines Substrats 3 eine Antennenspule 4 mit zwei Windungen. Die Antennenspule kann im allgemeinen auch mehr als zwei Windungen haben. Das Substrat 3 kann aus einer einfachen PVC-Folie mit einer Foliendicke von beispielsweise 50 µm bestehen. Andere dielektrische Substratmaterialien können gleichfalls eingesetzt werden. Die Antennenspule 4 kann auf der Seite 2 des Substrats 3 aufgedruckt, darauf geätzt oder in Drahtverlegetechnik verarbeitet sein. Wichtig bei der Spule ist die Fläche, die durch die Spule selbst oder durch weitere Flächen gebildet wird. Ein nicht dargestellter Transponderchip 5 sitzt an einem Ende der Spule 4 und ist über eine galvanische Brücke 6 mit dem entsprechend anderen Ende der Spule 4 elektrisch leitend verbunden. Parallel zum Chip 5 ist ein Kondensator C1 geschaltet, der in Figur 1 schematisch dargestellt ist. Der Kondensator C1 wird gebildet durch die Spule 4 und eine Kondensatorfläche 7 auf der Seite 2 des Substrats 3 einerseits und eine metallische Fläche 20, die angrenzend an die gegenüberliegende Seite des Substrats 3 angeordnet ist, andererseits. Die metallische Fläche 20 wird durch ein hier nicht näher dargestelltes metallisches Gehäuse des das Transponderelement 1 tragenden Gegenstands gebildet, beispielsweise durch ein Uhrengehäuse. Eine hier lediglich schematisch angedeutete galvanische Verbindung zur metallischen Fläche 20 schließt den elektrischen Teilkreis des Kondensators C1. Zudem besteht die Möglichkeit, dem Kondensator C1 einen ohmschen Widerstand zur Bedämpfung des Schwingkreises parallel zu schalten.

Die Gesamtkapazität des Schwingkreises ergibt sich dann aus den parasitären Kapazitäten, insbesondere der parasitären Kapazität der Spule 4 im Zusammenwirken mit der metallischen Fläche 20, und der expliziten Kapazität der Kondensatorfläche 7 im Zusammenwirken mit der metallischen Fläche 20. Die parasitäre Kapazität der Spule kann in manchen Fällen ausreichend sein, so dass der Kondensator C1 ohne die zusätzliche Kondensatorfläche 7 gebildet wird.

Anstelle der mehrwindigen Spule 4 kann auch eine Spule mit nur einer einzelnen Windung vorgesehen sein, so dass auf die galvanische Brücke 6 verzichtet werden kann. In diesem Fall ist es zur Erhöhung der Induktivität zweckmäßig, mehrere Schwingkreise miteinander zu kombinieren, wie es in der DE 102 58 670 A1 beschrieben ist. Insbesondere können mehrere übereinander angeordnete, durch dielektrische Schichten voneinander getrennte Antennenspulen vorgesehen werden. Zumindest der unterste dieser Schwingkreise umfasst einen Kondensator mit einer durch die metallische Fläche 20 des metallischen Gegenstandes gebildeten Kondensatorfläche (Gegenelektrode). Entsprechende Modifikationen sind möglich.

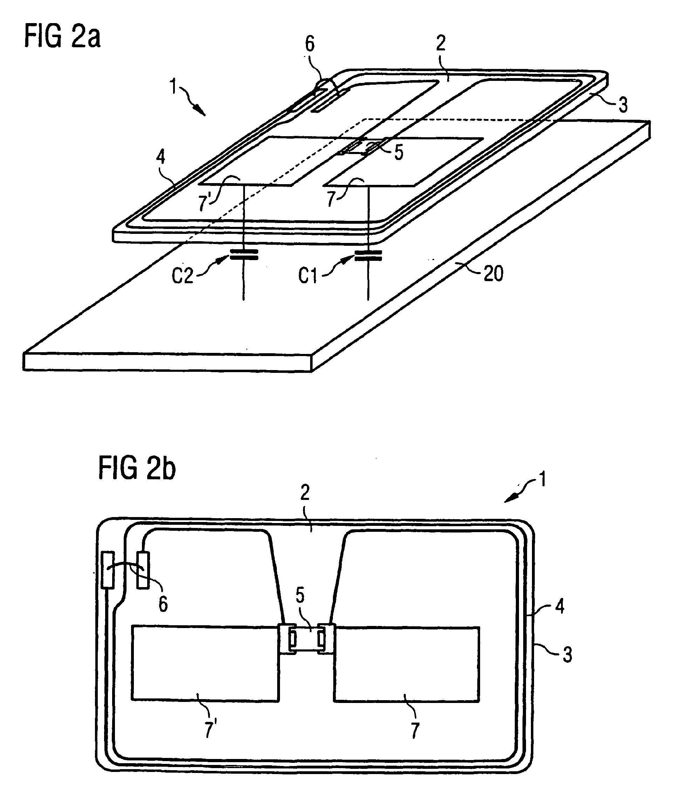

Das in Figur 2a dargestellte exemplarische Beispiel eines bekannten Transpondes unterscheidet sich vom Ausführungsbeispiel im wesentlichen nur dadurch, dass keine galvanische Verbindung 8 zwischen dem Transponderelement 1 und der metallischen Fläche 20 vorgesehen ist. Figur 2b zeigt das Transponderelement 1 aus Figur 2a in Draufsicht. Während sich das Ausführungsbeispiel für Anwendungen eignet, bei denen eine derartige galvanische Verbindung in der ein oder anderen Form bereits vorgesehen ist, etwa als Draht oder als elektrischer Kontakt (zum Beispiel aufgrund einer USB-Funktionalität, wie im Falle der eingangs genannten LAKS-Armbanduhren), eignet sich das exemplarische Beispiel eines Transponderelements für Anwendungen ohne derlei leitende Verbindungen. Anstelle der galvanischen Verbindung 8 ist ein weiterer Kondensator C2 vorhanden, der seinerseits gebildet wird durch eine erste Kondensatorfläche 7' und wiederum die metallische Fläche 20 des Gegenstandes als Gegenelektrode. Die Kondensatoren C1 und C2 sind in Serie geschaltet und bilden insgesamt einen dem Chip 5 parallel geschalteten Kondensator C. Geht man von gleich großer Kapazität C der beiden Kondensatoren C1 und C2 aus, so ergibt sich bei deren Serienschaltung eine Gesamtkapazität von 0,5 C. Die jeweils einzelne Kapazität C1 bzw. C2 errechnet sich nach der Formel (ε x A)/ d, wobei ε die Elektrizitätskonstante des Substrats 3, A die wirksame Fläche *7* bzw. *7'* und d die Dicke des Substrats 3 ist.

Wird dagegen die Kapazität C allein durch die parasitäre Kapazität der Spule 4 in Zusammenwirken mit dem Substrat 3 gebildet, also ohne die zusätzlichen Kondensatorflächen *7*, *7'*, so berechnet sich die Kapazität C bei einem 50 µm dicken Substrat 3 aus PVC, einer Leiterbahnlänge der zweiwindigen Spule 4 von 2 x 26 cm = 52 cm (bei einer Karte im ID1-Format mit Kantenlänge von etwa 8 x 5 cm²) und einer Leiterbahnbreite von 0,8 mm zu C = 3 x 8,85 x 10⁻¹² x 0,02 x 0,02/0,00005 = ca. 20 pF.

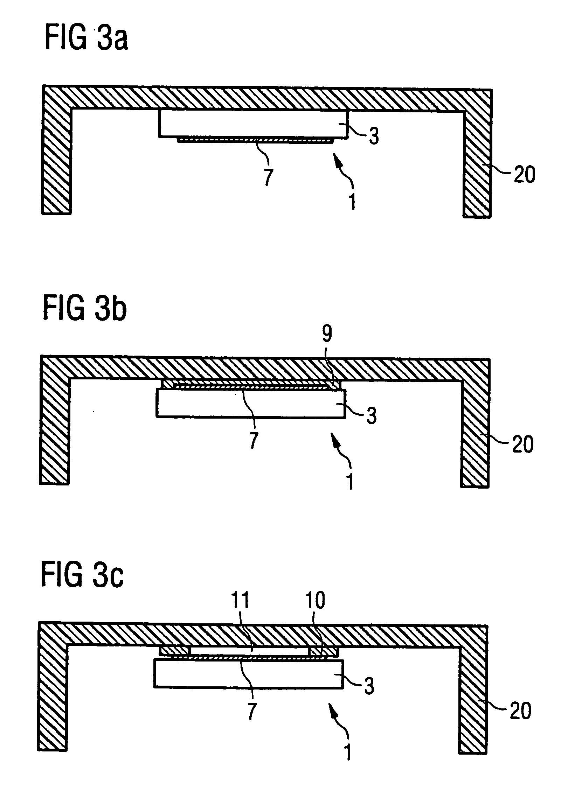

In den Figuren 3a bis 3c sind unterschiedliche Anordnungsvarianten eines Transponderelements 1 in einem metallischen Gehäuse 20 dargestellt. Den einfachsten Fall zeigt Figur 3a, bei der das Substrat 3 das Dielektrikum zwischen der Kondensatorfläche 7 und der metallischen Fläche 20 bildet. Das Transponderelement 1 kann beispielsweise durch Klemmen oder auf andere Weise mechanisch mit der metallischen Fläche 20 in Kontakt gehalten werden.

Figur 3b zeigt eine Variante, bei der das Substrat 3 lediglich tragende Funktion für die elektronischen Bauelemente des Transponderelements 1 besitzt. Bei dieser Variante wird das Transponderelement 1 mit der die Spule 4 und das bzw. die Kondensatorflächen *7* bzw. *7'* tragenden Seite 2 des Substrats 3 an der metallischen Fläche 20 angebracht. Eine zusätzliche dielektrische Schicht 9 ist vorgesehen, um den notwendigen Abstand zwischen der metallischen Schicht 20 und der Kondensatorfläche *7* herzustellen. Diese Schicht 9 wird vorteilhafterweise auf dem Substrat 3 appliziert, bevor das Transponderelement 1 an der metallischen Fläche 20 fixiert wird. Es kann sich beispielsweise um eine dünne Lackschicht aus geeignetem dielektrischen Material handeln.

Figur 3c zeigt eine weitere Variante, ähnlich der Figur 3b, bei der jedoch das Dielektrikum durch einen Luftspalt 11 gebildet wird, der sich dadurch ergibt, dass das Transponderelement 1 mittels Abstandshaltern 10 in einem Abstand zur metallischen Fläche 20 gehalten wird.

Im Falle eines runden Uhrgehäuses kann das Transponderelement 1 in Draufsicht runde Gestalt haben und eine runde Spule aufweisen. Der metallische Ring oder Torus der Uhr kann an einer Stelle durch einen schmalen, mit einem Dielektrikum mechanisch verschlossenen Spalt unterbrochen sein. Dadurch werden Wirbelströme reduziert, der Effekt der Kapazität aber bleibt erhalten.

## Patentansprüche

1. Transponderelement (1) zur Verwendung an oder in einem metallischen
Gegenstand (20) für die berührungslose Übertragung von Daten, umfassend:
- ein Substrat (3),
- eine Antennenspule (4) mit mindestens einer Spulenwindung auf einer Seite (2) des Substrats (3),
- eine erste Kondensatorfläche (7) eines zwei Kondensatorflächen (7, 20) erfordernden Kondensators (C1) auf der Seite (2) des Substrats (3) mit der spulenwindung, wobei die erste Kondensatorfläche (7) allein durch die Antennenspule (4) gebildet sein kann, und
- einen Transponderchip (5), der gemeinsam mit der Antennenspule (4) und den ersten Kondensatorfläche (7) einen funktionalen Teil für einen Transponder bildet,
- wobei von den zwei Kondensatorflächen, die der Kondensator (C1) erfordert, nur die erste Kondensatorfläche (7) Bestandteil des Transponderelements (1) ist
**dadurch gekennzeichnet, dass** eine galvanische Verbindung (8) durch das Substrat (3) hindurch vorgesehen ist zur Kontaktierung des Transponderelements (1) mit einer externen metallischen Fläche (20) desjenigen Gegenstands, an oder in dem das Transponderelement (1) Verwendung finden soll, um eine zweite Kondensatorfläche (20) funktional zu bilden.

2. Transponderelement nach Anspruch 1, **dadurch gekennzeichnet, dass** die mit der Antennenspule (4) und der Kondensatorfläche (7) versehene Seite (2) des Substrats (3) mit einer dielektrischen Schicht (9) beschichtet ist.

3. System umfassend einen metallischen tragbaren Gegenstand und ein Transponderelement (1) nach einem der Ansprüche 1 bis 2, wobei die zweite Kondensatorfläche (20) des zwei Kondensatorflächen (7, 20) erfordernden Kondensators (C1) durch eine metallische Fläche (20) des Gegenstands gebildet ist, **dadurch gekennzeichnet, dass** die galvanische Verbindung (8) eine Verbindung zwischen dem Transponderelement (1) und der zweiten Kondensatorfläche (20) herstellt.

4. System nach Anspruch 3, **dadurch gekennzeichnet, dass** der Gegenstand eine Armbanduhr ist.

5. System nach Anspruch 3, **dadurch gekennzeichnet, dass** der Gegenstand ein Mobilfunktelefon ist.

## Claims

1. A transponder element (1) for use on or in a metallic object (20) for contactless transfer of data, comprising:
- a substrate (3),
- an antenna coil (4) having at least one coil winding on one side (2) of the substrate (3),
- a first capacitor surface (7) of a capacitor (C1) requiring two capacitor surfaces (7, 20), on the side (2) of the substrate (3) with the coil winding, whereby the first capacitor surface (7) can be formed by the antenna coil (4) alone, and
- a transponder chip (5) which, jointly with the antenna coil (4) and the first capacitor surface (7), forms a functional part for a transponder,
- whereby of the two capacitor surfaces that the capacitor (C1) requires, only the first capacitor surface (7) is a component of the transponder element (1),
**characterized in that** a galvanic connection (8) through the substrate (3) is provided for contacting the transponder element (1) with an external metallic surface (20) of that object on or in which the transponder element (1) is to be used, in order to functionally form a second capacitor surface (20).

2. The transponder element according to claim 1, **characterized in that** the side (2) of the substrate (3) provided with the antenna coil (4) and the capacitor surface (7) is coated with a dielectric layer (9).

3. A system comprising a metallic portable object and a transponder element (1) according to either of claims 1 to 2, whereby the second capacitor surface (20) of the capacitor (C1) requiring two capacitor surfaces (7, 20) is formed by a metallic surface (20) of the object, **characterized in that** the galvanic connection (8) establishes a connection between the transponder element (1) and the second capacitor surface (20).

4. The system according to claim 3, **characterized in that** the object is a wristwatch.

5. The system according to claim 3, **characterized in that** the object is a mobile phone.

## Revendications

1. Elément de transpondeur (1) pour utilisation sur ou dans un objet métallique (20) pour la transmission sans contact de données, comprenant :
- un substrat (3),
- une bobine d'antenne (4) comportant au moins une spire de bobine sur un côté (2) du substrat (3),
- une première surface de condensateur (7) d'un condensateur (C1) requérant deux surfaces de condensateur (7, 20) du côté (2) du substrat (3) comportant la spire de bobine, la première surface de condensateur (7) pouvant être constituée uniquement par la bobine d'antenne (4), et
- une puce de transpondeur (5) qui constitue conjointement avec la bobine d'antenne (4) et la première surface de condensateur (7) une partie fonctionnelle pour un transpondeur.
- seule la première surface de condensateur (7) parmi les deux surfaces de condensateur requises par le condensateur (C1) étant partie constituante de l'élément de transpondeur (1),
**caractérisé en ce qu'**une connexion galvanique (8) à travers le substrat (3) est prévue pour la mise en contact de l'élément de transpondeur (1) avec une surface métallique externe (20) de l'objet sur ou dans lequel l'élément de transpondeur (1) doit servir afin de constituer fonctionnellement une deuxième surface de condensateur (20).

2. Elément de transpondeur selon la revendication 1, **caractérisé en ce que** le côté (2) du substrat (3) pourvu de la bobine d'antenne (4) et de la surface de condensateur (7) est revêtue d'une couche diélectrique (9).

3. Système comprenant un objet portable métallique et un élément de transpondeur (1) selon une des revendications de 1 à 2, la deuxième surface de condensateur (20) du condensateur (C1) requérant deux surfaces de condensateur (7, 20) étant constituée par une surface métallique (20) de l'objet, **caractérisé en ce que** la connexion galvanique (8) crée une connexion entre l'élément de transpondeur (1) et la deuxième surface de condensateur (20).

4. Système selon la revendication 3, **caractérisé en ce que** l'objet est une montre-bracelet.

5. Système selon la revendication 3, **caractérisé en ce que** l'objet est un radiotéléphone mobile.
